# EUROPEAN PATENT APPLICATION

(11) **EP 0 582 735 A1**
(43) Date of publication of application: **16.02.1994**
(21) Application number: 92113698.2
(22) Date of filing: 11.08.1992
(51) Int. Cl.: B60G 17/01, B60Q 1/115, B60N 2/44

(54) **Device for controlling the attitude of a vehicle**

(71) Applicant: LEDA Logarithmic Electrical Devices for Automation S.r.l., I-10121 Torino (IT)
(72) Inventor: Lazzaroni, Domenico, I-10100 Torino (IT)
(74) Representative: Plebani, Rinaldo

(57) **Abstract**

A device is described for controlling the attitude of a vehicle in dependence on the distribution of the load constituted by the passengers and the luggage in the vehicle itself; the device includes respective sensors integrated in the seats and in the floor of the boot and constituted by deformable pads of electrically conductive, elastomeric material whose electrical resistance varies in dependence on its state of compression and means for detecting the variation in electrical resistance of the pads; the detection means may be constituted by a central control unit which controls the stiffness of the vehicle suspensions and/or the attitude of the headlights thereof in dependence on the values of electrical resistance measured.

## Description

The present invention relates to a device for controlling the attitude of a vehicle, particularly for detecting at least the distribution of the overall weight of the passengers and of any luggage within the vehicle and consequently for actuating an attitude device for the vehicle itself, for example a device for varying the attitude of the vehicle headlights and/or, where this is present, a device for regulating the stiffness of the vehicle suspensions.

It is known that the travelling attitude of a vehicle depends, on the one hand, on the load distribution bearing on the vehicle axles, or the distribution of the "static" load, and, on the other hand, on the dynamic loads which act on the vehicle in motion and which depend both on the static load distribution and, particularly, on the direction and sense of any acceleration applied thereto as a result of the path travelled by the vehicle. For example, in the case of a high static load on the rear axle when, for example, the vehicle's boot is full, the nose of the vehicle tends to rise, requiring the attitude of the headlamps to be varied. A sharp bend taken at high speed, on the other hand, causes a great increase in the load bearing on the suspensions of those wheels on the outside of the curve as a result of the dynamic effect, causing the vehicle to roll.

In the first case it is known to adjust to the attitude of the headlamps manually; automatic systems have also been developed recently which detect the position of the vehicle's nose and automatically actuate an actuator which adjusts the attitude of the headlamps proportionally; in order to avoid roll and ensure good road holding, so-called "intelligent" suspension systems have also been developed in which sensors detect the spatial attitude of the vehicle in real time and a hydraulic system piloted by a central electronic control unit then acts on the (independent) suspensions for each wheel, varying their stiffness accordingly.

These automatic attitude-regulating systems (for the headlamps or for the suspensions) are currently little used since they at present utilise large numbers of expensive sensors which are not always very precise: for example, in the case of systems for adjusting suspensions, these currently use accelerometers located in correspondence with each wheel (or at least with each axle) and with the middle of the vehicle. These sensors moreover also cause not insignificant problems in assembly and cabling both because of their bulk and because of the fact that they must be mounted in zones which are remote from each other and sometimes not very accessible.

The object of the invention is to form a device for controlling the attitude of a vehicle which enables the attitude of the vehicle, at least under static loads, to be detected simply, effectively and relatively cheaply to enable the consequent adjustment of any attitude devices present in the vehicle, for example for the headlights or the suspensions.

This object is achieved by the invention which relates to a device for controlling the attitude of a vehicle characterised in that it includes respective load sensor means for sensing the load bearing on each seat and on the floor of a luggage compartment of the vehicle, the sensor means being integrated in the seats and in the floor of the luggage compartment and including respective deformable pads of electrically-conductive, elastomeric material whose electrical resistance varies in dependence on its state of compression; and means for detecting the variations in electrical resistance of the pads and consequently actuating an attitude device of the vehicle.

For a better understanding of the invention, a non-limiting description of one embodiment thereof will now be given with reference to the appended drawings, in which:
Figure 1 illustrates a control device according to the invention;
Figure 2 illustrates a detail of the device of Figure 1 on an enlarged scale; and
Figure 3 illustrates a different configuration of the device of Figure 1.

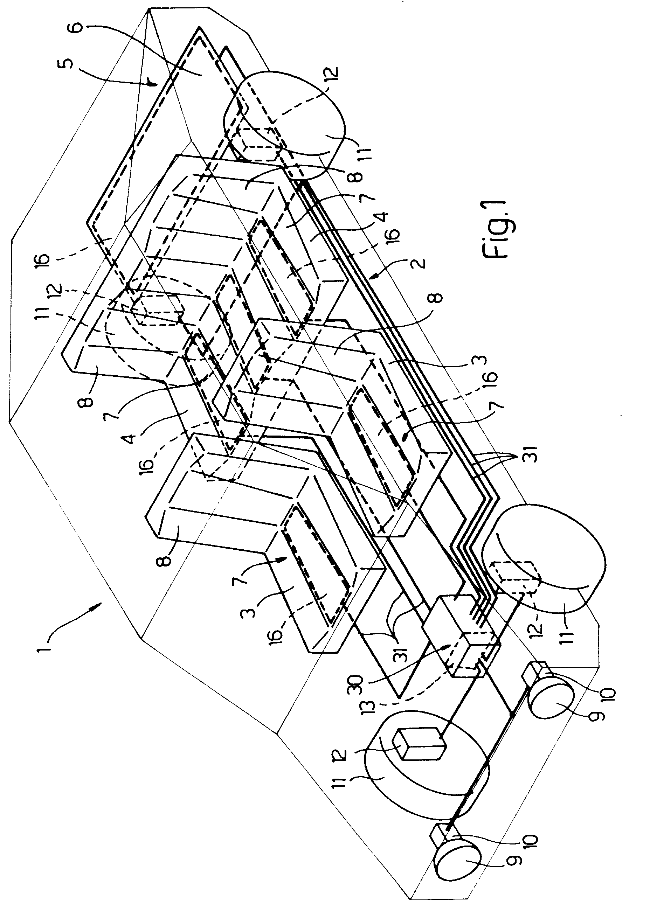

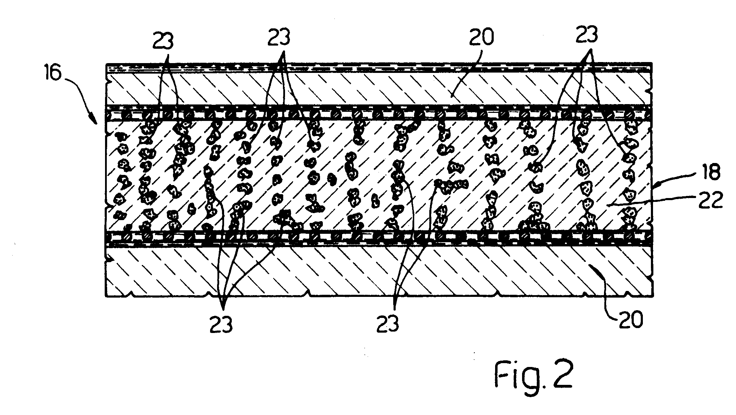

With reference to Figures 1 and 2, a known vehicle indicated 1 is provided with a device 2 for detecting its attitude; the vehicle 1, in this case a motor car, includes respective seats, front 3 and rear 4, and a boot or luggage space 5 the bottom of which is defined by a floor 6; each seat 3, 4 includes a squab 7 and a backrest 8; the vehicle 1 also has respective front headlights 9, for example fixed to the body by a known three-point system, whose attitude can be adjusted vertically in known manner by respective known actuators 10. Respective wheels 11 of the vehicle 1 have independent suspensions 12 whose stiffness may be regulated in known manner through a known electro-hydraulic control unit 13.

According to the invention, the device 2 includes load sensor means for sensing the load bearing on each seat 3, 4 and on the floor 6, generally indicated 16, one of which is illustrated in section and on an enlarged scale in Figure 2: each sensor 16 is integrated in the squab 7 of the respective seat 3, 4 or in the floor 6 of the boot 5 and includes a respective deformable pad 18 of electrically-conductive elastomeric material whose electrical resistance can vary in dependence on its state of compression and a pair of respective opposed flexible contact elements 19, for example wire meshes, between which the pad 18 is clamped in a pack and which are connected electrically in known manner, not illustrated for simplicity, for example through electrical cables with opposite polarities, to known means, not illustrated for simplicity, for measuring the electrical resistance; in the particular case illustrated, the pads 18 and the respective contact elements 19 of the sensors 16 in the seats 3, 4 are formed as part of the known upholstery 20 of the seats themselves while, for example, the sensor 16 in the floor 6 may be in the form of a mat for covering this floor, still constituted by a pad 18 but in this case in sheet form enclosed between two wire mesh contact elements 19. In both cases the sensor 16 is preferably enclosed in an electrically insulating cover which surrounds the pad 18 and its contact elements 19 and is constituted, for example, by the upholstery 20 itself or, in the case of the sensor 16 for the boot 5, by a non-conductive coating film.

The electrically-conductive, elastomeric material whose electrical resistance can vary in dependence on its state of compression and of which the pads 18 are made, and its method of manufacture, are described in Italian Patents Nos 1206890, 1210777 and 1211401 in the name of the same applicants, the contents of which are incorporated herein as regards the parts necessary simply for reference. As shown in detail on an enlarged scale in Figure 2, this material has the characteristic of comprising an elastomeric matrix 22 which is elastically deformable, non conductive, in a state of triaxial precompression and has a plurality of open cells, which cells are not visible in the drawing in that they are occupied by particles of electrically conductive material 23 which are uniformly distributed in the matrix 22 so as to form chains of particles in good contact with each other through the matrix itself. Thus, when the material forming the pads 18 is subjected to a compressive force, the particles 23, which are already in contact with each other even with the pad 18 uncompressed and thus always ensure that it has a certain degree of electrical conductivity, are pressed more firmly against each other and in greater numbers so as to increase the electrical conductivity of the pad 18 in accordance with a predetermined law which is reproducible with absolute precision and which is a characteristic of the constituent material.

The device 2 is completed by means which can detect the variations in electrical resistance of the pads 18, in use, and which can consequently actuate for example the actuators 10 and/or can control the suspensions 12 in suitable manner. The control means in this case include a central control unit 30, preferably of known microprocessor type, which incorporates or which is as least strictly connected to any central control unit 13 and which incorporates (or is connected to) circuits for measuring electrical resistance connected in known manner through lines 31 to the pads 18.

In use, a user of a seat 3, 4 compresses the pad 18 of the respective sensor 16 proportionally with his weight; the compression of the pad 18 causes, as described above, a measurable variation in its electrical resistance, which variation is detected by the central control unit 30; the same is true for any luggage (or other parcels with a degree of weight) deposited on the floor 6 of the boot 5. By virtue of the characteristics of the constituent material of the pads 18 moreover, it is possible for the central control unit 30 to detect not only a qualitative change in the presence or otherwise of passengers/luggage but it is also possible for it to effect a quantitive measurement of the weight of the luggage and of each passenger: indeed, each pad 18 will have a corresponding electrical resistance when unloaded (or not under compression) which is known and which may be measured initially and stored in the central control unit 30; the reduction in electrical resistance resulting from squashing of each pad 18 will, moreover, be correlated to the magnitude of this squashing, that is, to the weight bearing on each sensor 16; hence, the variation in the electrical resistance of each pad 18 measured in use by the central control unit 30 will be proportional to the weight bearing on the pad itself, with a correspondence (ohmkilo).

Consequently, the central control unit 30 is able to actuate the actuators 10 in an on-off manner, for example to make the headlamps 9 move selectively between two different predetermined positions according to whether the vehicle is fully loaded (all seats occupied and luggage compartment full) or half loaded (only some seats occupied and the luggage compartment only partly filled) or, depending on the type of programming, is able to actuate them continuously so as to produce a continuous variation in the attitude of the headlamps 9 between two extreme positions in dependence on the degree of static loading of the vehicle 1. Similarly, it may be possible to act on the suspensions 12, for example by stiffening the rear axle suspensions when the vehicle 1 is fully loaded.

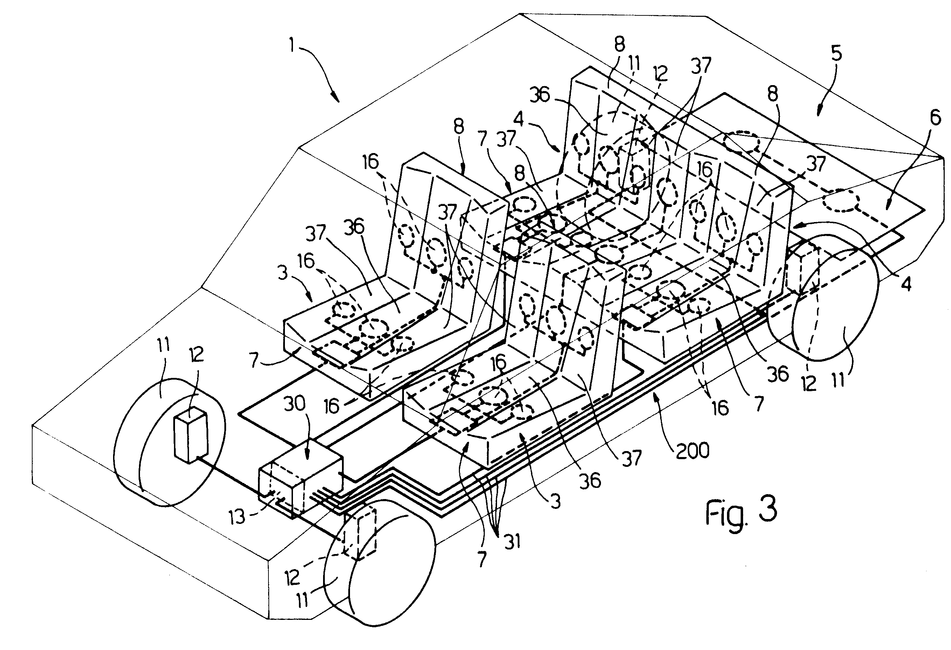

With reference now to Figure 3, this illustrates a vehicle 1 entirely similar to that described previously but in which a variant 200 of the device 2 of the invention is installed, the variant being conceived particularly to effect dynamic control of the suspensions 12 of the vehicle 1 during travel. Details similar to or identical to those described above are indicated by the same numerals for simplicity.

As illustrated in Figure 3, the seats 3, 4 are of the wrap-around type and each include a central support portion 36 and respective opposing side portions 37 for containing the body of a user of the seat 3, 4; this variant uses sensors 16 entirely similar to the preceding ones, for example comprising a pad 18 clamped between two meshes 19 but of smaller extent, for example of rounded form, integrated in the upholstery 20 of the seats 3, 4, there being at least one for each portion 36, 37. Initial, local data processing may also be carried out for each seat 3, 4 by means of a known device 40 for the differential measurement of the electrical resistance detected on the seat sensors 16, in turn connected to the central control unit 30 by means of a data line 31. The central control unit 30 is in this case programmed in such a manner that, in dependence on the variation in electrical resistance of the pads 18 of the sensors 16 disposed in the containing portions 37 of the seats 3, 4 detected during movement of the vehicle, it establishes, in real time, the instantaneous spatial attitude of the vehicle and, in particular, any instantaneous tangential acceleration thereof, and consequently it adjusts the stiffness of the suspensions 12 for each wheel 11 of the vehicle 1 independently of each other.

In other words, in use, when for example the vehicle 1 travels round a bend, the passengers in the seats 3, 4 who have a certain mass, which is known to the central control unit 30 (in that this may be calculated from a measurement of the passenger's weight which can be effected by means of the sensors in the portion 36 of the seat) will be moved by the acceleration against one of the containing portions 37 and will consequently exert a pressure of measurable value on the respective sensors 16; this pressure in fact corresponds to a measurable variation in the electrical resistance of the pad 18 of the respective sensor 16. This variation is thus measured and, on the basis of this measurement and the use of dynamic equations, the acceleration to which the vehicle is subject at a given moment can be calculated (the acceleration is provided to a first approximation by dividing the force corresponding to the pressure exerted against the sensor 16 by the mass of the passenger), at least with suitable correction factors which the central control unit 30 may calculate by comparing the acceleration values which result from the reading of the sensors 16 for each seat 3, 4. Consequently, the sensors 16, when disposed as in Figure 3, enable the central control unit 30 to obtain the same information as is currently obtainable from sensors which are much more complicated and delicate, such as accelerometers, and hence, by acting through the central control unit 13, enable the stiffness of each suspension 12 to be adjusted to an approximation sufficient to ensure good road holding in known manner and in real time.

The advantages of the invention will be apparent from the description above; with the use of sensors, such as the sensor 16, and with a suitable arrangement thereof, coupled with the use of electrical resistance measuring means, devices may be realised simply, economically and with practically no bulk, which are able to detect both the static attitude (case of Figure 1) and the dynamic attitude (case of Figure 3) of a vehicle; these devices are easy to cable and instal, being integrated in elements within the vehicle and enable the attitude adjustment to be effected automatically in various vehicles, from the simplest adjustment (discrete adjustment of the headlight attitude) to the most complex (control of the suspension stiffness during travel).

## Claims

1. A device for controlling the attitude of a vehicle characterised in that it includes respective load sensor means for sensing the load bearing on each seat and on the floor of a luggage compartment of the vehicle, the sensor means being integrated in the seats and in the floor of the luggage compartment and including respective deformable pads of electrically-conductive, elastomeric material whose electrical resistance varies in dependence on its state of compression; and means for detecting the variations in electrical resistance of the pads and consequently actuating an attitude device of the vehicle.

2. A device according to Claim 1, characterised in that it includes an electronic central control unit for determining the weight bearing each seat and on the floor of the luggage compartment of the vehicle in dependence on the measured electrical resistance of each individual pad and consequently for controlling a device for adjusting the attitude of respective headlights of the vehicle.

3. A device according to Claim 1, characterised in that it includes an electronic central control unit for determining the weight bearing on each seat and on the floor of the luggage compartment of the vehicle in dependence on the measured electrical resistance of each individual pad and consequently for controlling a device for regulating the stiffness of the vehicle suspensions.

4. A device according to Claim 3, characterised in that the vehicle seats are of the wrap-around type and include a central support portion and respective opposing side portions for containing the body of a user; each seat having at least three of the said sensor pads, one in the central support portion and one in each containing side portion; the central control unit being arranged, in dependence on the variation in electrical resistance of the pads disposed in the containing portions of the seats detected during travel of the vehicle, to establish, in real time, the instantaneous spatial attitude of the vehicle and, in particular, any instantaneous tangential acceleration thereof, and consequently to regulate the stiffness of the suspensions for each wheel of the vehicle independently of the others.

5. A device according to any one of the preceding Claims, characterised in that the pads of electrically-conductive elastomeric material whose electrical resistance varies on variation of its state of compression are formed as parts of the upholstery of the seats; the pads being clamped in a pack each between a respective pair of opposing, flexible contact elements, for example wire meshes, which are connected electrically to means for measuring the electrical resistance between the contact elements.
